# EUROPEAN PATENT APPLICATION

(11) **EP 2 184 841 A1**
(43) Date of publication of application: **12.05.2010**
(21) Application number: 08792145.8
(22) Date of filing: 29.07.2008
(51) Int. Cl.: H02M 3/155

(54) **VEHICLE STEP-UP CONVERTER CIRCUIT**

(30) Priority: 27.08.2007 JP 2007219441
(71) Applicant: Toyota Jidosha Kabushiki Kaisha, Toyota-shi, Aichi 471-8571 (JP)
(72) Inventor: UCHIDA, Kenji, Toyota-shi Aichi 471-8571 (JP)
(74) Representative: TBK-Patent
(86) International application number: PCT/JP2008/063941
(87) International publication number: WO 2009/028302

(57) **Abstract**

A vehicle step-up converter circuit capable of preventing an excessive current from flowing in electric components and also capable of quickly regulating the step-up voltage. The vehicle step-up converter circuit comprises a battery; an inductor, one terminal of which is connected to one terminal of the battery; a first switch connected between the other terminal of the inductor and the other terminal of the battery; a second switch, one terminal of which is connected to the other terminal of the inductor; a capacitor connected between the other terminal of the second switch and the other terminal of the battery; and a switch control part that controls the first and second switches; wherein the first and second switches are controlled, thereby charging the capacitor to output, as an output voltage, the voltage held by the capacitor. In this vehicle step-up converter circuit, the switch control part on/off controls the first switch on and off at a predetermined duty ratio, thereby regulating the output voltage.

## Description

### Background of the Invention

### 1. Field of the Invention

The present invention relates to a step-up converter circuit for stepping up a voltage of a battery for a motor driven vehicle.

### 2. Description of the Related Art

Motor driven vehicles, such as electric automobiles and hybrid automobiles, are widely used. A motor of a motor driven vehicle rotates by electric power supplied from a battery to drive wheels. Acceleration-deceleration control for the motor driven vehicle is performed by regulating the electric power supplied to the motor in accordance with accelerator and brake operations. Thus, a step-up converter circuit for regulating the electric power supplied from the battery to the motor is mounted in the motor driven vehicle.

The step-up converter circuit includes an inductor for stepping up the battery voltage. The step-up converter circuit controls switching of the current flowing from the battery to the inductor so as to generate an induced electromotive force at the inductor and a voltage, which is the induced electromotive force added to the battery voltage, charges an output capacitor. Then, the terminal voltage of the output capacitor is output as a step-up voltage. The step-up voltage is regulated by varying the switching timing of the current flowing to the inductor.

To the output terminals of the step-up converter circuit is connected a motor via an inverter circuit for converting DC voltage to AC voltage. According to this configuration, regulating the step-up voltage of the step-up converter circuit enables the electric power supplied from the battery to the motor to be regulated.

A control unit for controlling the step-up converter circuit determines a target step-up voltage according to driving operation. Then, the switching timing of current flowing to the inductor is regulated so that the step-up voltage approaches the target step-up voltage. The motor rotates according to the electric power controlled in this manner thereby driving the wheels. As a result, acceleration-deceleration control of the motor driven vehicle can be performed according to driving operation.

Japanese Patent Laid-Open Publication 2005-51898 discloses the above-mentioned step-up converter circuit and a control method thereof.

### Summary of the Invention

A control unit obtains a target step-up voltage according to driving operation. Then, a step-up converter circuit is controlled so that the step-up voltage approaches the target step-up voltage. When the step-up voltage is varied, a current based on a charging current of an output capacitor flows to the step-up converter circuit.

Therefore, the target step-up voltage rapidly changes due to sudden driving operations and when the step-up voltage rapidly changes as a result, an overcurrent flows to the step-up converter circuit possibly shortening the life of electric components. Thus, in a step-up converter circuit of the prior art, there are instances where it is not possible for the step-up voltage to track the changes in the target step-up voltage.

An object of the present invention is to solve these issues by providing a vehicle step-up converter circuit to make it possible to prevent the flow of excessive currents to electric components and quickly regulates the step-up voltage.

The present invention includes a battery for supplying power to a vehicle drive motor, an inductor of which one terminal is connected to one terminal of the battery, a first switch connected between the other terminal of the inductor and the other terminal of the battery, a second switch of which one terminal is connected to the other terminal of the inductor, a capacitor connected between the other terminal of the second switch and the other terminal of the battery, and a switch control unit for controlling the first switch and the second switch. Due to control of the first switch and the second switch, a voltage, which is an induced electromotive force of the inductor added to the terminal voltage of the battery, is applied to the capacitor and a voltage, which is retained by the capacitor, is output as an output voltage, and due to control of the first switch and the second switch in accordance with travel control of the vehicle, the output voltage is regulated, wherein the switch control unit regulates the output voltage by controlling the first switch on and off at a predetermined duty ratio.

Furthermore, the vehicle step-up converter circuit relating to the present invention further includes a table storage unit for storing a duty ratio table where a duty ratio corresponds to a difference between the battery voltage and the output voltage, and the switch control unit preferably selects one of a plurality of duty ratios included the duty ratio table on the basis of the difference between the battery voltage and the output voltage and controls the first switch according to the selected duty ratio.

Furthermore, the vehicle step-up converter circuit relating to the present invention further includes a table storage unit for storing a duty ratio time variable table where a duty ratio corresponds to an elapsed time from control start, and the switch control unit preferably selects one of a plurality of duty ratios included in the duty ratio time variable table on the basis of elapsed time from control start and controls the first switch according to the selected duty ratio.

Furthermore, in the vehicle step-up converter circuit relating to the present invention, the first switch and the second switch respectively include a transistor and the switch control unit preferably controls a base-emitter voltage of the respective transistor in the first switch and the second switch.

A vehicle step-up converter circuit can be provided capable of preventing excessive current from flowing to electric components as well as quickly regulating the step-up voltage.

### Brief Description of the Drawings

FIG. 1 shows a configuration of a motor driven vehicle relating to an embodiment of the present invention.
FIG. 2 shows a configuration of the step-up converter circuit relating to the embodiment of the present invention.
FIG. 3 is a flowchart showing a control operation to lower an output voltage.
FIG. 4 shows an example of a duty ratio table with the contents thereof in a graph.
FIG. 5 shows an example of a duty ratio time variable table with the content thereof in a graph.
FIG. 6 shows a simulation result of control for determining the duty ratio in accordance with the elapsed time from control start.

### Detailed Description of the Preferred Embodiments

### (1) Configuration and Travel Control of Motor Driven Vehicle

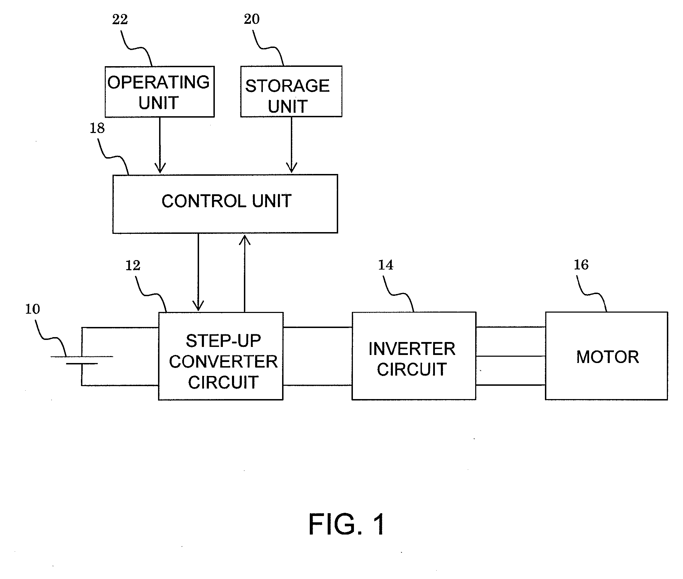

FIG. 1 shows a configuration of the motor driven vehicle relating to an embodiment of the present invention. The motor drive vehicle rotates a motor 16 on the basis of electric power supplied from a battery 10 and travels by the driving force of the motor 16. Acceleration-deceleration control of the motor driven vehicle is performed by regulating the electric power supplied from the battery 10 to the motor 16. Thus, a step-up converter circuit 12 is used in the motor driven vehicle for stepping up the battery voltage and regulating the step-up voltage. Furthermore, since the motor 16, which rotates by AC voltage, is used, an inverter circuit 14 is used for converting the output voltage of the step-up converter circuit 12 to AC voltage.

The battery voltage is stepped up by the step-up converter circuit 12 and output to the inverter circuit 14 on the basis of control by a control unit 18. The output voltage of the step-up converter circuit 12 is converted to AC voltage by the inverter circuit 14 and output to the motor 16. The higher the output voltage of the step-up converter circuit 12, the higher the AC voltage output by the inverter circuit 14. Furthermore, the lower the output voltage of the step-up converter circuit 12, the lower the AC voltage output. Therefore, regulating the output voltage of the step-up converter circuit 12 enables the output AC voltage of the inverter circuit 14 to be regulated.

When the motor 16 rotates at a speed in accordance with the output AC voltage of the inverter circuit 14, electric power is not transferred between the battery 10 and the motor 16 and the motor 16 rotates at a constant speed. In this state, when the output voltage of the step-up converter circuit 12 is increased, the output AC voltage of the inverter circuit 14 increases and electric power is supplied from the battery 10 to the motor 16 via the step-up converter circuit 12 and the inverter circuit 14. As a result, the motor 16 generates acceleration torque and the motor driven vehicle accelerates. Furthermore, when the output voltage of the step-up converter circuit 12 is lowered, the output AC voltage of the inverter circuit 14 decreases and electric power is recycled from the motor 16 to the battery 10 via the inverter circuit 14 and the step-up converter circuit 12. As a result, the motor 16 generates a braking torque and the motor driven vehicle decelerates. Aside from the braking torque of the motor 16, deceleration of the motor driven vehicle can also be performed by a separately installed brake mechanism.

An operating unit 22 includes an accelerator pedal, a brake pedal, and so forth, and outputs control commands in accordance with driving operations to the control unit 18. The control unit 18 determines a target output voltage for the step-up converter circuit 12 on the basis of control commands. Then, the step-up converter circuit 12 is controlled so that the difference between the output voltage of the step-up converter circuit 12 and the target output voltage is small.

In this manner, in the motor driven vehicle, the target output voltage of the step-up converter circuit is determined in accordance with driving operation and control of the step-up converter circuit is performed in accordance with the target output voltage. However, in a motor driven vehicle of the prior art, if the target step-up voltage rapidly changes with sudden driving operations and the output voltage of the step-up converter circuit rapidly changes accordingly, an overcurrent may flow within the step-up converter circuit possibly shortening the life of electric components.

Accordingly, in the motor driven automobile relating to the embodiment of the present invention, control of the step-up converter circuit 12 is performed so as to prevent an excessive current from flowing to electric components and to enable the output voltage to be quickly regulated.

### (2) Configuration and Output Voltage Control of Step-Up Converter Circuit 12

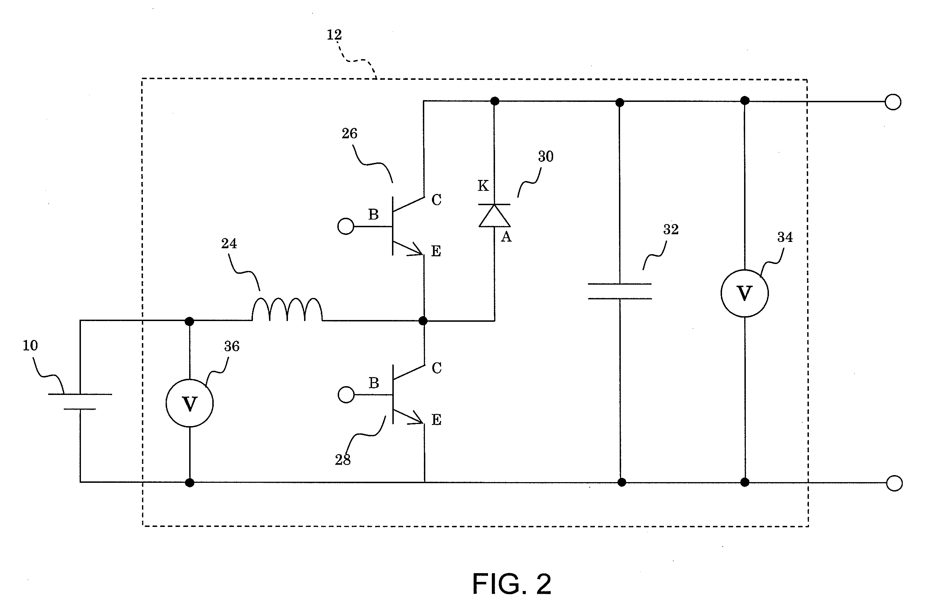

The configuration of the step-up converter circuit 12 and the control of the step-up converter circuit 12 will be described. FIG. 2 shows the configuration of the step-up converter circuit 12 relating to the embodiment of the present invention. The control unit 18 controls the step-up converter circuit 12 so that the difference between the target output voltage determined on the basis of driving operation and the output voltage is small.

The control of the step-up converter circuit 12 is performed by controlling the switching of an upper arm transistor 26 and a lower arm transistor 28. The upper arm transistor 26 and the lower arm transistor 28 can be controlled to turn on or off by varying the voltage between a base terminal B and an emitter terminal E. When the upper arm transistor 26 and the lower arm transistor 28 are on, a current flows from a collector terminal C to the emitter terminal E.

### (i) Rise and Maintenance Control of Output Voltage

The control unit 18 performs rise and maintenance control of the output voltage when a measured output voltage read from an output voltmeter 34 is less than or equal to the target output voltage. This control is performed by keeping the upper arm transistor 26 off and controlling the lower arm transistor 28 on and off.

To the positive terminal of the battery 10 is connected one end of an inductor 24. Furthermore, the other end of the inductor 24 is connected to the collector terminal C of the lower arm transistor 28 and the emitter terminal E of the lower arm transistor 28 is connected to the negative terminal of the battery 10. Therefore, when the lower arm transistor 28 is switched from off to on, a current flows into the collector terminal C of the lower arm transistor 28 from the battery 10 via the inductor 24.

Thereafter, when the lower arm transistor 28 is turned off, the current flowing to the inductor 24 is interrupted and an induced electromotive force with the lower arm transistor 28 side considered to be positive is generated at the inductor 24.

One end of the inductor 24 is connected to the positive terminal of the battery and the other end is connected to an anode terminal A of a diode 30. Furthermore, a capacitor 32 is connected between a cathode terminal K of the diode 30 and the negative terminal of the battery 10. Therefore, if a voltage, which is an inductor induced electromotive voltage added to the battery voltage, is greater than the terminal voltage of the capacitor 32, the diode 30 is applied with a forward voltage and conducts. As a result, the capacitor 32 is charged by a voltage, which is the inductor induced electromotive voltage added to the battery voltage, and the output voltage can be raised.

The induced electromotive force generated at the inductor 24 depends on the magnitude of current flowing to the inductor 24 immediately prior to interruption of the current. Then, the current flowing to the inductor 24 increases with the elapse of time after the lower arm transistor 28 turns on. Therefore, by determining the on time of the lower arm transistor 28 so that the voltage, which is the inductor induced electromotive force added to the battery voltage, reaches the target output voltage, the capacitor 32 is charged by a voltage having the same value as the target output voltage to enable the output voltage to approach the target output voltage.

Accordingly, when the control unit 18 performs rise and maintenance control, a measured battery voltage is read from a battery voltmeter 36. Then, the on time of the lower arm transistor 28 is obtained so that the induced electromotive force of the inductor 24 becomes a value, which is the measured battery voltage subtracted from the target output voltage.

The control unit 18 performs repetitive control to turn on and off the lower arm transistor 28 so that the lower arm transistor 28 turns on only for the obtained on time. As a result, when the lower arm transistor 28 is off, a voltage having an identical value to the target output voltage is applied to the capacitor 32 and the capacitor 32 charges.

When the lower arm transistor 28 is turned on, the charging voltage of the capacitor 32 becomes a reverse voltage with respect to the diode 30 and the diode 30 enters a cutoff state. As a result, discharging of the capacitor 32 via the diode 30 is prevented.

According to this control, charging of the capacitor 32 is repeated by the on/off switching of the lower arm transistor 28. As a result, the capacitor 32 is charged until the target output voltage so that the output voltage can be raised to the target voltage. Furthermore, the output voltage can be maintained after attaining the target output voltage.

### (ii) Control for Lowering the Output Voltage

The control unit 18 performs a control for lowering the output voltage when the measured output voltage read from the output voltmeter 34 exceeds the target output voltage. This control is performed by keeping the lower arm transistor 28 off and controlling the upper arm transistor 26 on and off.

The capacitor 32 is connected between the collector terminal C of the upper arm transistor 26 and the negative terminal of the battery 10. Furthermore, the emitter terminal E of the upper arm transistor 26 is connected to one end of the inductor 24 and the collector terminal C of the lower arm transistor 28. Then, the other end of the inductor 24 is connected to the positive terminal of the battery 10 and the emitter terminal E of the lower arm transistor 28 is connected to the negative terminal of the battery 10.

Therefore, when the upper arm transistor 26 is turned on and the lower arm transistor 28 is turned off in a state where the capacitor 32 is charged with a voltage higher than the battery voltage, a discharge current flows from the capacitor 32 to the inductor 24 via the upper arm transistor 26. As a result, the terminal voltage of the capacitor 32 is lowered and the output voltage can be lowered. The discharge current generates Joule heat from the resistance component included in the inductor 24 as well as flows to the battery 10 to charge the battery 10.

The discharge current becomes larger as the difference between the terminal voltage of the capacitor 32 and the battery voltage increases. Therefore, when the difference voltage is large, there is a risk of an overcurrent flowing to the upper arm transistor 26, the inductor 24, and the battery 10. Accordingly, the control unit 18 controls the upper arm transistor 26 on and off at a duty ratio determined in accordance with a difference between the output voltage and the battery voltage.

When the upper arm transistor 26 is controlled on and off, the discharge current is interrupted every time the upper arm transistor 26 is off. Once interrupted, the discharge current increases from current value 0 when the upper arm transistor 26 is turned on again. As a result, a continual increase in the discharge current is avoided and an excessive current can be prevented from flowing to the upper arm transistor 26 and the inductor 24.

The amplitude of the discharge current based on on/off control increases as the duty ratio is increased and decreases as the discharge of the capacitor 32 progresses. Accordingly, the control unit 18 performs a control process to lower the terminal voltage of the capacitor 32 as well as increase the duty ratio. As a result, the capacitor 32 can be discharged at the largest current possible without becoming an overcurrent and the output voltage can be quickly lowered.

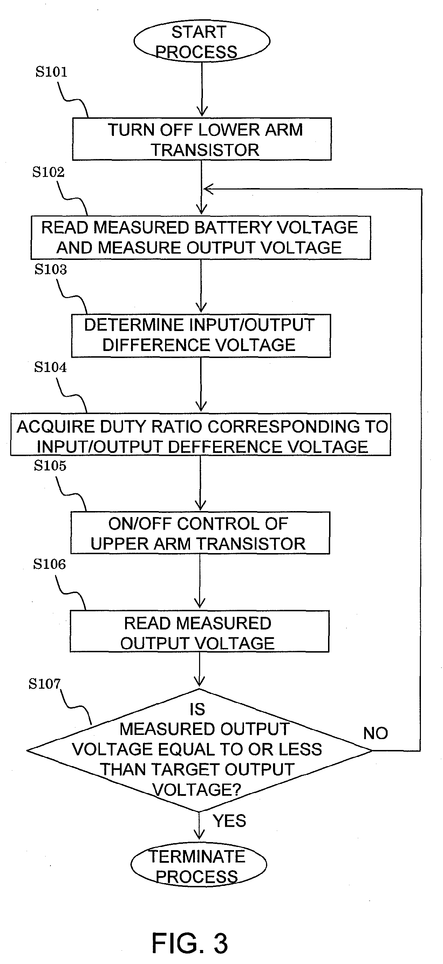

On the basis of this principle, the control unit 18 performs the control shown in the flowchart of FIG. 3. The control unit 18 turns off (S101) the lower arm transistor 28. Then, a measured battery voltage is read from the battery voltmeter 36 and a measured output voltage is read from the output voltmeter 34 (S102). The control unit 18 obtains an input-output difference voltage, which is the measured battery voltage subtracted from the measured output voltage (S103). Then, a duty ratio table stored in a storage unit 20 is referenced and a duty ratio corresponding to the input-output difference voltage is acquired (S104).

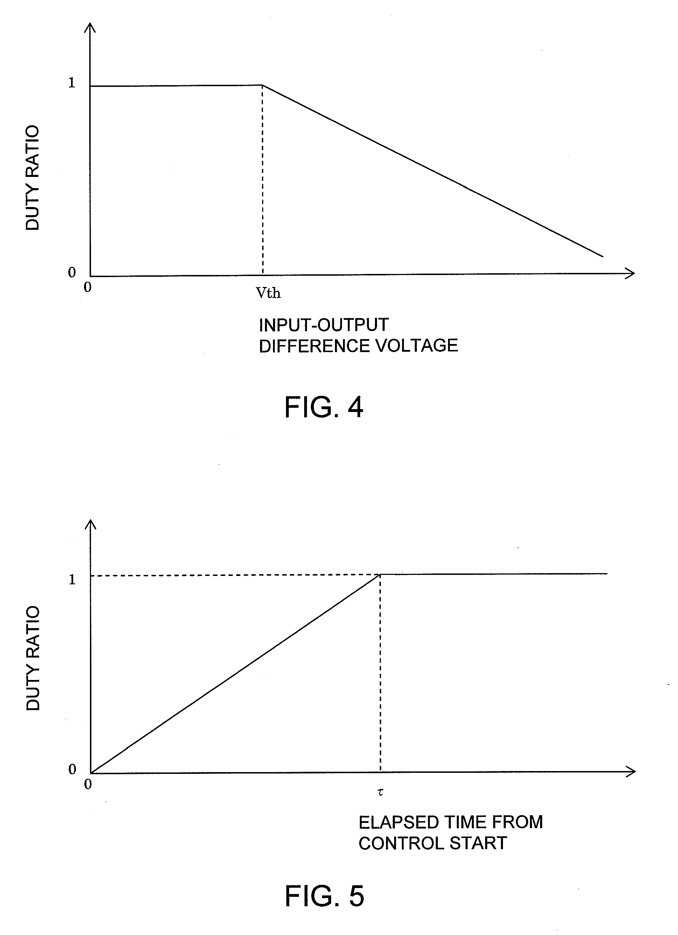

Here, the duty ratio table determines the duty ratio corresponding to an input-output difference voltage. FIG. 4 shows an example of a duty ratio table with the contents thereof in a graph. The duty ratio table of FIG. 4 shows a duty ratio of 1 when the input-output difference voltage is less than Vth and the duty ratio decreasing as the input-output difference voltage increases when the input-output difference voltage is greater than or equal to the threshold voltage Vth.

The control unit 18 performs on/off control (S105) of the upper arm transistor 26 as shown next according to the duty ratio acquired in step S104 and a predetermined on/off period.

The control unit 18 turns on the upper arm transistor 26. Then, after the lower arm transistor 28 is turned on only for a time, which is the on/off period multiplied by the duty ratio acquired in step S104, the upper arm transistor 26 is turned off.

After the upper arm transistor 26 is turned off only for the remaining time of one on/off period, the control unit 18 again turns on the upper arm transistor 26 and thereafter performs on/off control of the lower arm transistor 28 in a similar manner.

The control unit 18 reads (S106) the measured output voltage from the output voltmeter 34 and compares the measured output voltage and the target output voltage (S107). Then, the operation returns to step S102 when the measured output value exceeds the target output voltage and on/off control is continued on the basis of the duty ratio corresponding to the input-output difference voltage. On the other hand, when the measured output voltage is equal to the target output voltage or less, the control for lowering the output voltage is terminated and the rise and maintenance control for the output voltage is performed.

According to this control, the control unit 18 performs on/off control of the upper arm transistor 26 at a duty ratio based on the duty ratio table. The duty ratio table shows a larger duty ratio as the input-output difference voltage becomes smaller when the input-output difference voltage is greater than or equal to the threshold voltage Vth. Therefore, when the input-output difference voltage is greater than or equal to the threshold voltage Vth, a control operation can be performed so that the terminal voltage of the capacitor 32 drops through discharge, the input-output difference voltage decreases, and the duty ratio is increased. As a result, overcurrent is prevented and the output voltage can be quickly lowered.

Furthermore, the duty ratio table indicates a duty ratio of 1 when the input-output difference voltage is less than the threshold voltage Vth. Therefore, when the input-output difference voltage is less than the threshold voltage Vth, a state is entered where the upper arm transistor 26 is kept on and the capacitor 32 can be discharged in the shortest time. As a result, the output voltage can be lowered quickly.

The duty ratio table can be created from evaluation experiments or simulations on the basis of defined allowable currents with respect to the battery 10, the inductor 24, the upper arm transistor 26, and so forth.

The control for determining the duty ratio in accordance with the input-output difference voltage was described herein. Besides this control, it is also possible to perform a control for determining the duty ratio in accordance with the elapsed time from the beginning of the control for lowering the output voltage.

FIG. 5 shows an example of a duty ratio time variable table, which is a correspondence between the elapsed time from control start and duty ratio, with the content thereof shown in a graph. The duty ratio time variable table of FIG. 5 shows the duty ratio increasing from 0 to 1 between the start of control until time τ and the duty ratio at a constant 1 after time τ.

The control unit 18 references the duty ratio time variable table and acquires the duty ratio on the basis of the elapsed time from control start. Then, the lower arm transistor 28 is turned off and the upper arm transistor 26 is controlled on and off according to the acquired duty ratio.

According to this control, the duty ratio increases as the time elapses from the start of control for lowering the output voltage. Furthermore, the terminal voltage of the capacitor 32 drops as the discharge progresses. Therefore, it is possible to perform a control for increasing the duty ratio as the terminal voltage of the capacitor 32 drops. As a result, the capacitor 32 can be discharged at the largest current possible without becoming an overcurrent and the output voltage can be quickly lowered.

Furthermore, in this control, it is not necessary to read the measured output voltage and the measured battery voltage. Thus, a control program for the control unit 18 can be simplified and the design cost can be reduced.

The duty ratio time variable table can be created on the basis of defined allowable currents with respect to the battery 10, the inductor 24, and the upper arm transistor 26, discharge characteristic simulation results for the capacitor 32, and so forth.

Due to control program issues when raising the output voltage, a malfunction of the internal circuitry of the control unit 18, and so forth, at the step-up converter circuit 12, an overvoltage state can occur where the output voltage exceeds a predetermined value. The control for lowering the output voltage described here may be performed to resolve this sort of overvoltage state.

When the overvoltage state occurs in a motor driven vehicle of the prior art, it was difficult to quickly lower the output voltage to prevent an overcurrent from flowing to the step-up converter circuit. Furthermore, when the motor is rotated in the overvoltage state, an overcurrent flows to the electric components possibly shortening the life of electric components. Thus, in a motor driven vehicle of the prior art, a control is performed to forcibly stop the vehicle when an overvoltage state occurs.

According to the motor driven vehicle relating to the embodiment of the present invention, an overvoltage state can be quickly resolved. Therefore, shortening of the life of electric components and the forcible stop of the vehicle can be avoided.

### (iii) Simulation Result

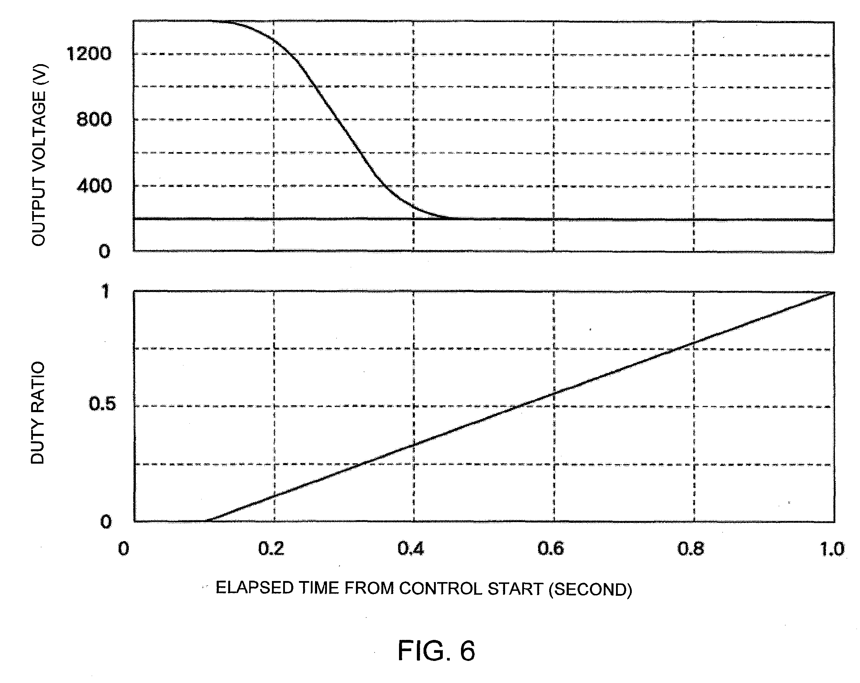

FIG. 6 shows a simulation result of control for determining the duty ratio in accordance with elapsed time from control start. The bottom graph of FIG. 6 shows the duty ratio time variable table for the upper arm transistor 26 and the top graph shows the output voltage. In the simulation, a state is supposed where no load is connected to the output terminals of the step-up converter circuit 12. Furthermore, the inductance value is 0.2 mH and the resistance component is 0.2 Ω of the inductor 24, the capacitance of the capacitor 32 is 1000 µF, and the battery voltage is 200 V. The simulation result confirms the output voltage can be lowered in 0.4 second from 1400 V to the battery voltage of 200 V as the duty ratio is linearly increased from 0 to 1 in 0.9 second. Furthermore, at this time, the maximum value of the current flowing to the upper arm transistor 26 and the inductor 24 can be confirmed to be 20 A.

## Claims

1. A vehicle step-up converter circuit comprising:
a battery for supplying power to a vehicle drive motor;
an inductor of which one terminal is connected to one terminal of the battery;
a first switch connected between the other terminal of the inductor and the other terminal of the battery;
a second switch of which one terminal is connected to the other terminal of the inductor;
a capacitor connected between the other terminal of the second switch and the other terminal of the battery; and
a switch control unit for controlling the first switch and the second switch;
due to control of the first switch and the second switch, a voltage, which is an induced electromotive force of the inductor added to the terminal voltage of the battery, is applied to the capacitor and a voltage, which is retained by the capacitor, is output as an output voltage;
due to control of the first switch and the second switch in accordance with travel control of a vehicle, the output voltage is regulated;
wherein the switch control unit regulates the output voltage by controlling the first switch on and off at a predetermined duty ratio.

2. A vehicle step-up converter circuit according to claim 1 further comprising a table storage unit for storing a duty ratio table where a duty ratio corresponds to a difference between the battery voltage and the output voltage;
the switch control unit selects one of a plurality of duty ratios included the duty ratio table on the basis of the difference between the battery voltage and the output voltage and controls the first switch according to the selected duty ratio.

3. A vehicle step-up converter circuit according to claim 1 further comprising a table storage unit for storing a duty ratio time variable table where a duty ratio corresponds to an elapsed time from control start;
the switch control unit selects one of a plurality of duty ratios included in the duty ratio time variable table on the basis of elapsed time from control start and controls the first switch according to the selected duty ratio.

4. A vehicle step-up converter according to claim 1, wherein the first switch and the second switch respectively comprise a transistor;
the switch control unit controls a base-emitter voltage of the respective transistor in the first switch and the second switch.
